(19) Europäisches Patentamt
European Patent Office
Office européen des brevets

(11) **EP 1 066 498 B1**

(12) **EUROPÄISCHE PATENTSCHRIFT**

(45) Veröffentlichungstag und Bekanntmachung des Hinweises auf die Patenterteilung:
**04.06.2008 Patentblatt 2008/23**

(21) Anmeldenummer: **99914525.3**

(22) Anmeldetag: **20.03.1999**

(51) Int Cl.:
***G01F 1/66*** *(2006.01)*

(86) Internationale Anmeldenummer:
**PCT/EP1999/001877**

(87) Internationale Veröffentlichungsnummer:
**WO 1999/049282 (30.09.1999 Gazette 1999/39)**

(54) **Verfahren und Anordnung zur Bestimmung der Fördermenge von pulsierend transportiertem Fördergut**

Method and device for determining the delivery volume of material which is transported in a pulsed manner

Procédé et dispositif pour déterminer le volume refoulé d'une matière transportée de façon pulsée

(84) Benannte Vertragsstaaten:
**DE DK ES FR GB IT**

(30) Priorität: **24.03.1998 DE 19812771**

(43) Veröffentlichungstag der Anmeldung:
**10.01.2001 Patentblatt 2001/02**

(73) Patentinhaber: **Putzmeister Concrete Pumps GmbH**
**72631 Aichtal (DE)**

(72) Erfinder: **SCHNITZLER, Christof**
**D-72622 Nürtingen (DE)**

(74) Vertreter: **Wolf, Eckhard et al**
**Patentanwälte Wolf & Lutz**
**Hauptmannsreute 93**
**70193 Stuttgart (DE)**

(56) Entgegenhaltungen:
**EP-A- 0 104 004       EP-A- 0 519 752**
**EP-A- 0 519 754       DE-A- 4 035 518**
**DE-A- 4 206 576       US-A- 5 571 974**

EP 1 066 498 B1

**Beschreibung**

Die Erfindung betrifft ein Verfahren und eine Anordnung zur Bestimmung der Fördermenge von mittels einer Dickstoffkolbenpumpe pulsierend durch ein Förderrohr transportiertem Fördergut.

Unter Dickstoffen sollen im folgenden Feststoff-Flüssiggemische mit mehr oder weniger hohem Feststoffanteil verstanden werden, wie sie beispielsweise bei teilentwässerten Klärschlämmen, bei Kohlestaub-Flüssiggemischen oder bei Beton auftreten. Die bekannten Dickstoffkolbenpumpen weisen meist zwei Förderzylinder auf, deren stirnseitige Öffnungen in einen Materialaufgabebehälter münden und abwechselnd während des Druckhubs über eine Rohrweiche mit dem Förderrohr verbindbar und während des Saughubs unter Ansaugen des Förderguts zum Materialaufgabebehälter hin offen sind. Die Förderzylinder werden über hydraulische Antriebszylinder im Gegentakt angetrieben. Bei der Bestimmung der Fördermenge ist zu berücksichtigen, daß das Fördergut aufgrund von Luftansaugung und Lufteinschlüssen nicht das gesamte Volumen der Förderzylinder ausfüllt. Es muß vielmehr bei jedem Druckhub zunächst auf den Förderdruck komprimiert werden, bevor die Fördergutsäule im Förderrohr in Bewegung gesetzt wird. Die Fördermenge des von einer Kolbenpumpe durch ein Förderrohr transportierten Förderguts ergibt sich daher zu

$$q = \nu V_z r \qquad\qquad (1)$$

wobei $V_z$ das Volumen der Förderzylinder, $\nu$ die Hubfrequenz oder Hubzahl und $r < 1$ den Füllgrad der Förderzylinder bedeuten.

Häufig wird der Füllgrad r als konstanter Faktor angenommen. Dabei wird nicht berücksichtigt, daß der Füllgrad dadurch beeinflußt werden kann, daß der absolute Druck in der Förderleitung von Störgrößen, wie Länge, Beschaffenheit, Form und Querschnitt der Förderleitung sowie der Viskosität des Förderguts abhängig ist und daß die angesaugte Luftmenge je nach Konsistenz und Vorpressung des im Saughub aus dem Materialaufgabebehälter angesaugten Förderguts und je nach Füllstand im Materialaufgabebehälter in weiten Grenzen variieren kann. Die Annahme eines konstanten Füllgrades führt daher bei der Bestimmung des Volumenstroms von Dickstoffen häufig zu nicht tolerierbaren Fehlern.

Um diesen Nachteil zu vermeiden, ist es bereits bekannt (DE-C 40 35 518), aus dem Strömungs- bzw. Druckverlauf in der Förderleitung Rückschlüsse dahingehend zu ziehen, wie lang die Kompressionszeit und wie lang die effektive Förderzeit dauert. Aus dem Verhältnis zwischen der effektiven Förderzeit und der Gesamthubzeit gegebenenfalls unter zusätzlicher Berücksichtigung von Auszeiten läßt sich der Füllgrad des Förderzylinders für jeden Hub bestimmen und zwar unabhängig von den Ursachen, die zum variablen Füllgrad führen können. Als Meßgröße zur Bestimmung der effektiven Förderzeit wird bei dem bekannten Verfahren der Förderdruck in der Förderleitung kontinuierlich oder in vorgegebenen Zeitabständen gemessen, wobei aus dem zeitabhängigen Amplitudenverlauf des gemessenen Förderdrucks sowohl der zeitliche Abstand zwischen aufeinanderfolgenden Druckhüben zur Bestimmung der Hubzahl als auch der Füllgrad des Förderzylinders zur Bestimmung des effektiven Fördervolumens bei jedem Druckhub ermittelt werden. Da das mittlere Druckniveau im Förderrohr aus verschiedenen Gründen zeitlich variieren kann, beispielsweise weil

- die Fördersäule entlang der Förderleitung unterschiedlich hoch sein kann und der statische Druck dadurch verändert wird,

- der Förderwiderstand in der Förderleitung aufgrund unterschiedlicher Konsistenz, Betätigen von Schiebern oder Zuschalten von Förderleitungen variiert,

- die Viskosität und/oder die Dichte des Fördermediums sich ändert,

- der Drucksensor durch Verschmutzung oder Ablagerung von Fördergut in seiner Funktion beeinträchtigt wird,

kann es zu Verfälschungen in den auszuwertenden Signalen und damit zu Fehlmessungen kommen. Um diesen Nachteil zu vermeiden, wurde bereits die Verwendung eines Strömungsmelders vorgeschlagen, der einen im Bereich der Förderleitung angeordneten Ultraschallsender und -empfänger umfaßt (DE-A 42 06 576). Versuche haben gezeigt, daß die hierbei auftretenden, strömungsabhängigen Signale störungsanfällig sind und keine zuverlässigen Rückschlüsse auf den Strömungszustand des Förderguts in der Förderleitung zulassen.

Weiter ist es bei einer Zweiphasenströmung (Gas/Flüssigkeit) an sich bekannt (EP-0 519 752 A2 und EP-0 519 754 A2), mittels eines Sensors zur Messung von Körperschallsignalen, die durch strömendes Fördergut hervor gerufen werden, zu einem Maß für einen Fluidvolumenstrom zu gelangen.

Ausgehend hiervon liegt der Erfindung die Aufgabe zugrunde, ein Verfahren und eine Anordnung der eingangs angegebenen Art zu entwickeln, womit bei geringer Störungsanfälligkeit eine genaue Fördermengenmessung von pulsierenden Fördergutströmen möglich ist.

Zur Lösung dieser Aufgabe werden die in den Patentansprüchen 1 und 9 angegebenen Merkmalskombinationen vorgeschlagen. Vorteilhafte Ausgestaltungen und Weiterbildungen der Erfindung ergeben sich aus den Unteransprüchen.

Das Wesen der Erfindung besteht darin, dass an einer Messstelle des Förderrohrs ein durch das pulsierend strömende Fördergut hervorgerufenes Körperschallsignal gemessen wird und dass das gemessene Körperschallsignal zur Bestimmung der Fördermenge ausgewertet wird. Das Körperschallsignal wird dabei aus einem im Förderrohr im Bereich der Messstelle auftretenden Fließ- oder Reibgeräusch des pulsierend strömenden Förderguts abgeleitet. Die Fließ- oder Reibgeräusche können durch eine Querschnittsänderung oder eine Wandinhomogenität des Förderrohrs im Bereich der Messstelle verstärkt werden. Eine weitere Verbesserung in dieser Hinsicht kann dadurch erzielt werden, dass das Körperschallsignal durch einen am oder im Förderrohr angeordneten, auf die Fließ- oder Reibgeräusche des Förderguts ansprechenden Schwingungserzeuger verstärkt wird. Das Körperschallsignal wird zweckmäßig mittels eines von außen her an das Förderrohr angekoppelten oder in dessen Wandung eingreifenden Schall- oder Bewegungssensors gemessen.

Erfindungsgemäß wird dabei die Pulsdauer des gemessenen Körperschallsignals bei den einzelnen Druckhüben der Kolbendickstoffpumpe zur Bestimmung der Fördermenge ausgewertet. Gemäß einer bevorzugten Ausgestaltung der Erfindung wird der Intensitäts- oder Amplitudenverlauf des Körperschallsignals bei den einzelnen Druckhüben der Kolbendickstoffpumpe zur Bestimmung der Fördermenge ausgewertet.

Zur Erhöhung der Genauigkeit kann aus dem gemessenen Körperschallsignal ein definiertes Frequenzband ausgewählt werden, dessen Intensitäts- oder Amplitudenverlauf digitalisiert und statistisch ausgewertet wird.

Gemäß einer bevorzugten Ausgestaltung des erfindungsgemäßen Verfahrens werden zur Bestimmung des Fördervolumens folgende Verfahrensschritte ausgeführt:

- Der Intensitätswert des Körperschallsignals wird während eines jeden Kolbenhubs in definierten Zeitschritten erfasst,

- zum Ende eines jeden Kolbenhubs hin wird aus einer vorgegebenen Anzahl von Intensitätswerten ein als Förderpegel definierter Mittelwert gebildet,

- aus dem Förderpegel eines vorangegangenen Kolbenhubs wird ein um einen Toleranzfaktor < 1 nach unten begrenztes Toleranzband bestimmt,

- wobei für jeden Kolbenhub die Anzahl der innerhalb des Toleranzbandes liegenden Intensitätswerte ermittelt und zur Bestimmung des Füllgrades durch die Gesamtzahl der Zeitschritte während eines Kolbenhubs dividiert wird,

- zur Bestimmung des Fördervolumens wird das vom Kolben durchlaufene Zylindervolumen mit dem Füllgrad multipliziert.

Korrelationsuntersuchungen haben ergeben, dass der Toleranzfaktor zweckmäßig zwischen 0,04 und 0,25, vorzugsweise von 0,07 bis 0,13 zu wählen ist.

Zusätzlich zu dem Körperschallsignal wird gemäß der Erfindung die Hubdauer des Kolbens bei den einzelnen Druckhüben vorgegeben oder gemessen, wobei die Pulsdauer des gemessenen Körperschallsignals im Verhältnis zur Hubdauer des Kolbens zur Bestimmung der Fördermenge ausgewertet wird. Zusätzlich oder alternativ dazu kann auch der Kolbenweg oder die Kolbengeschwindigkeit bei den einzelnen Druckhüben vorgegeben oder gemessen werden, wobei die Pulsdauer und/oder der Intensitäts- oder Amplitudenverlauf des gemessenen Körperschallsignals mit dem Kolbenweg oder der Kolbengeschwindigkeit verglichen und zur Bestimmung der Fördermenge ausgewertet wird.

Die erfindungsgemäße Anordnung zur Bestimmung der Fördermenge von mittels einer Dickstoffkolbenpumpe pulsierend durch ein Förderrohr transportiertem Fördergut weist bevorzugt einen an einer Messstelle des Förderguts angeordneten Sensor zur Messung eines durch das pulsierend strömende Fördergut hervorgerufenen Körperschallsignals auf, der ausgangsseitig an eine Auswerteeinheit zur Bestimmung der Fördermenge angeschlossen ist. Der Sensor kann dabei als piezoelektrischer Schall- oder Beschleunigungssensor oder als Mikrophon ausgebildet sein.

Ein weiteres Erfindungsmerkmal besteht darin, dass die Auswerteeinheit eine Schaltungseinrichtung und/oder eine Softwareroutine zur Bestimmung und Auswertung der Pulsdauer und/oder des Intensitäts- und Amplitudenverlaufs des gemessenen Körperschallsignals bei jedem Druckhub der Dickstoffkolbenpumpe aufweist. Zur Erleichterung der Auswertung wird die Auswerteeinheit zusätzlich mit Bewegungs- oder Steuersignalen der Dickstoffkolbenpumpe beaufschlagt.

Zur Verstärkung der Körperschallsignale kann das Förderrohr im Bereich der Messstelle mit einer Querschnittsverengung oder einer Wandinhomogenität versehen werden. Weiter kann an dieser Stelle ein zusätzlicher Schwingungserzeuger vorgesehen werden, der gegebenenfalls in das Rohrinnere eingreift und vom vorbeiströmenden Fördergut beaufschlagt wird. Der Sensor kann starr am Förderrohr angekopppelt oder in dessen Wandung eingebettet sein. Er ist zweckmäßig an einem mit einem Magneten ausgestatteten Träger zum Ankoppeln an das aus magnetisierbarem Material bestehende Förderrohr angeordnet.

Die aufgrund der gemessenen Körperschallsignale ermittelten Fördermengen werden durch Auslitern oder Referenzmessung kalibriert. Zu diesem Zweck weist die Auswerteeinheit einen Kalibriereingang für die zu bestimmende Fördermenge auf.

Im folgenden wird die Erfindung anhand eines in der Zeichnung in schematischer Weise dargestellten Ausführungsbeispiels näher erläutert.

Die einzige Figur zeigt ein Schema einer Anordnung zur Messung des Volumenstroms von Fördergut, das mit Hilfe einer Dickstoffkolbenpumpe durch ein Förderrohr transportiert wird.

Die in der Zeichnung dargestellte Dickstoffkolbenpumpe 1 besteht im wesentlichen aus zwei Förderzylindern 10,12, deren stirnseitige Öffnungen 14,16 in einen über eine Vorpreßeinrichtung 17 beschickbaren Materialaufgabebehälter 18 münden und abwechselnd während des Druckhubs über eine Rohrweiche 20 mit einem Förderrohr 22 verbindbar und während des Saughubs unter Ansaugen von Fördergut 24 zum Materialaufgabebehälter 18 hin offen sind. Die Förderzylinder 10,12 werden über hydraulische Antriebszylinder 26,28 über eine symbolisch angedeutete Pumpenanordnung 29 im Gegentakt angetrieben. Zu diesem Zweck sind die Förderkolben 30,32 über eine gemeinsame Kolbenstange 34,36 mit den Kolben 38,40 der Amtriebszylinder 26,28 verbunden. Bei dem gezeigten Ausführungsbeispiel werden die Antriebszylinder 26,28 bodenseitig über Druckleitungen 44,46 mit Hilfe einer Hydropumpe abwechselnd mit Drucköl beaufschlagt. An ihrem stangenseitigen Ende sind die Antriebszylinder 26,28 durch eine Verbindungsleitung 48 hydraulisch miteinander gekoppelt.

Am Förderrohr 22 befindet sich eine Meßstelle 50, an der von außen her ein beispielsweise als piezoelektrischer Beschleunigungsaufnehmer ausgebildeter Sensor angeschlossen ist. Der Sensor 52 eignet sich zur Aufnahme von Körperschallsignalen, die durch Reib- oder Strömungsgeräusche des im Inneren des Förderrohrs 22 in Richtung des Pfeils 54 vorbeiströmenden Förderguts erzeugt werden. Zur Verstärkung der Reibgeräusche ist bei dem gezeigten Ausführungsbeispiel im Bereich der Meßstelle 50 eine Querschnittsverengung vorgesehen. Der Ausgang des Sensors 52 ist über eine Signalleitung 55 und einen nicht dargestellten Analog-/Digitalwandler mit dem Eingang einer mikroprozessorgesteuerten Auswerteelektronik 56 verbunden, die vorzugsweise einen Einplatinenrechner mit Digitalanzeige 58 enthält. Die Auswerteelektronik 56 ist ferner über die Signalleitung 60 mit Bewegungs- oder Steuersignalen der Pumpenanordnung 29 beaufschlagt.

Weiter enthält die Auswerteelektronik 56 einen Kalibriereingang 62, über den der Anzeigepegel bei einem Kalibriervorgang, bei welchem Fördergut ausgelitert wird, eingestellt werden kann. Mit den gemessenen Körperschallsignalen wird erreicht, daß Auszeiten und Verdichtungszeiten des pulsierenden Fördergutstroms durch die Körperschallmessung zuverlässig eliminiert werden können, so daß nur die effektive Förderzeit bei der Bestimmung der Fördermenge berücksichtigt wird. Die Fördermenge kann dabei aus dem Amplitudenverlauf des gemessenen Körperschallsignals ermittelt werden. Die von der Pumpenanordnung 29 herrührenden Steuer- oder Bewegungssignale der Förderpumpe dienen vor allem zur Funktionsüberwachung und zur Plausibilitätskontrolle der ermittelten Werte.

Grundsätzlich ist es möglich, auch die in der DE-A 42 06 576 beschriebene statistische Methode zur Auswertung der gemessenen Körperschallsignale heranzuziehen.

Eine besonders vorteilhafte Verfahrensweise bei der Bestimmung des Fördervolumens aus dem Körperschallsignal sieht folgende Verfahrensschritte vor:

- Erfassen der Intensitätswerte $K_i$ des Körperschallsignals während eines jeden Kolbenhubs in definierten Zeitschritten $t_i$ in der Größenordnung einiger Millisekunden,

- Normierung der Intensitätswerte

- Bestimmung des Förderpegels $\overline{K}$ als Mittelwert der letzten m (z.B. 20) Intensitätswerte $K_i$ (z.B. 160 ms vor Erreichen der Endlage),

- Bestimmung der Gesamtzahl n der Zeitschritte,

- Bestimmung der Anzahl $n_K$ Intensitätswerte $K_i$, die innerhalb eines Toleranzbandes $\overline{K} - x\overline{K} \ldots \overline{K} + x\overline{K}$ liegen.

- Bestimmung des Füllgrads r aus dem Quotienten $n_{K/n}$.

- Bestimmung des Fördervolumens V pro Kolbenhub aus dem Füllgrad r und dem Bruttovolumen $V_z$ nach der Beziehung

$$V = rV_z$$

Zusammenfassend ist folgendes festzuhalten: Die Erfindung bezieht sich auf ein Verfahren und eine Anordnung zur Bestimmung der Fördermenge von mittels einer Dickstoffkolbenpumpe 1 pulsierend durch ein Förderrohr 22 transportiertem Fördergut. Die Fördermenge wird indirekt über ein Körperschallsignal bestimmt, das durch das im Förderrohr durch das pulsierend strömende Fördergut hervorgerufen und an einer Meßstelle des Förderrohrs 22 mittels eines Sensors 52 von außen her gemessen und in einer Auswerteeinheit 56 ausgewertet wird.

**Patentansprüche**

1. Verfahren zur Bestimmung der Fördermenge von mittels einer Dickstoffkolbenpumpe (1) pulsierend durch ein Förderrohr (22) transportiertem Fördergut, **dadurch gekennzeichnet, daß** an einer Meßstelle (50) des Förderrohrs (22) ein durch das pulsierende strömende Fördergut hervorgerufenes Körperschallsignal gemessen wird, daß das Körperschallsignal aus einem im Förderrohr (22) im Bereich der Meßstelle (50) auftretenden Fließ- oder Reibgeräusch des pulsierend strömenden Förderguts abgeleitet wird, daß der Intensitäts- oder Amplitudenverlauf des gemessenen Körperschallsignals bestimmt und daraus die Pulsdauer des gemessenen Körperschallsignals bei den einzelnen Druckhüben der Dickstoffkolbenpumpe abgeleitet wird, daß die Hubdauer des Kolbens der Dickstoffkolbenpumpe bei den einzelnen Druckhüben vorgegeben oder gemessen wird, und daß die Pulsdauer des gemessenen Körperschallsignals im Verhältnis zur Hubdauer des Kolbens zur Bestimmung der Fördermenge ausgewertet wird.

2. Verfahren nach Anspruch 1, **dadurch gekennzeichnet, daß** das Fließ- oder Reibgeräusch durch eine Querschnittsänderung oder Wandinhomogenität des Förderrohrs (22) im Bereich der Meßstelle (50) verstärkt wird.

3. Verfahren nach Anspruch 1 oder 2, d**adurch gekennzeichnet,** daß das Körperschallsignal durch einen am oder im Förderrohr (22) angeordneten, auf Fließ- oder Reibgeräusche des pulsierend strömenden Förderguts ansprechenden Schwingungserzeuger verstärkt wird.

4. Verfahren nach einem der Ansprüche 1 bis 3, **dadurch gekennzeichnet, daß** aus dem gemessenen Körperschallsignal ein definiertes Frequenzband ausgewählt wird, dessen Intensitäts- oder Amplitudenverlauf digitalisiert und statistisch ausgewertet wird.

5. Verfahren nach einem der Ansprüche 1 bis 4, **dadurch gekennzeichnet, daß** der Kolbenweg oder die Kolbengeschwindigkeit der Dickstoffkolbenpumpe bei den einzelnen Druckhüben vorgegeben oder gemessen wird, und daß die Pulsdauer und/oder der Intensitäts- oder Amplitudenverlauf des gemessenen Körperschallsignals mit dem Kolbenweg oder der Kolbengeschwindigkeit verglichen und zur Bestimmung der Fördermenge ausgewertet wird.

6. Verfahren nach einem der Ansprüche 1 bis 5, **dadurch gekennzeichnet, daß** das Körperschallsignal mittels eines am Förderrohr (22) angekoppelten oder in dessen Wandung eingebetteten Schall- oder Beschleunigungssensors gemessen wird.

7. Verfahren nach einem der Ansprüche 1 bis 6, **dadurch gekennzeichnet, daß** der Intensitätswert ($K_i$) des Körperschallsignals während eines jeden Kolbenhubs in definierten Zeitschritten erfaßt wird, daß zum Ende eines jeden Kolbenhubs hin aus einer Anzahl (m) Intensitätswerte ($K_i$) ein als Förderpegel ($\overline{K}$) definierter Mittelwert gebildet wird, daß aus dem Förderpegel ($\overline{K}$) eines vorangegangenen Kolbenhubs ein um einen Toleranzfaktor $(1-x) < 1$ nach unten begrenztes Toleranzband bestimmt wird, daß bei jedem Kolbenhub die Anzahl ($n_K$) der innerhalb des Toleranzbandes liegenden Intensitätswerte ($K_l$) ermittelt und zur Bestimmung eines Füllgrades (r) durch die Gesamtzahl (n) der Zeitschritte während eines Kolbenhubs dividiert wird, und daß zur Bestimmung des Fördervolumens pro Kolbenhub der Füllgrad (r) mit dem vom Kolben durchlaufenen Zylindervolumen ($V_Z$) multipliziert wird.

8. Verfahren nach Anspruch 7, **dadurch gekennzeichnet, dass** der Toleranzfaktor $(1-x)$ zwischen 0,04 und 0,25, vorzugsweise zwischen 0,07 und 0,13 gewählt wird.

9. Anordnung zur Bestimmung der Fördermenge von mittels einer Dickstoffkolbenpumpe pulsierend durch ein Förderrohr (22) transportiertem Fördergut, **gekennzeichnet durch** einen an einer Messstelle (50) des Förderrohrs (22) angeordneten Sensor (52) zur Messung eines **durch** das pulsierend strömende Fördergut hervorgerufenen Körperschallsignals, der ausgangsseitig an eine Auswerteeinheit (56) zur Bestimmung der Fördermenge angeschlossen ist, wobei die Auswerteeinheit (56) eine Schaltungsanordnung oder eine Softwareroutine zur Bestimmung und Auswertung des Intensitäts- oder Amplitudenverlaufs und zur Bestimmung der Pulsdauer des gemessenen Körperschallsignals bei jedem Druckhub der Dickstoffpumpe aufweist, und wobei die Auswerteeinheit (56) zusätzlich mit Bewegungs- oder Steuersignalen der Dickstoffkolbenpumpe beaufschlagbar ist.

10. Anordnung nach Anspruch 9, **dadurch gekennzeichnet, dass** der Sensor (52) als piezoelektrischer Schall- oder Beschleunigungssensor ausgebildet ist.

11. Anordnung nach Anspruch 9, **dadurch gekennzeichnet, dass** der Sensor als Mikrophon ausgebildet ist.

12. Anordnung nach einem der Ansprüche 9 bis 11, **dadurch gekennzeichnet, dass** das Förderrohr (22) im Bereich der Messstelle (50) eine Querschnittsverengung, eine Wandinhomogenität oder einen Schwingungserzeuger aufweist.

13. Anordnung nach einem der Ansprüche 9 bis 12, **dadurch gekennzeichnet, dass** der Sensor (52) starr am Förderrohr (22) angekoppelt oder in dessen Wandung eingebettet ist.

14. Anordnung nach einem der Ansprüche 9 bis 13, **dadurch gekennzeichnet, dass** der Sensor (52) an einem einen Magneten aufweisenden Träger zum Ankoppeln an das aus magnetisierbarem Material bestehende Förderrohr (22) angeordnet ist.

15. Anordnung nach einem der Ansprüche 9 bis 14, **dadurch gekennzeichnet, dass** die Auswerteeinheit (56) einen Kalibriereingang (62) für die zu bestimmende Fördermenge aufweist.

**Claims**

1. Process for determining the conveyed amount of material pulsatingly conveyed through a delivery pipe (22) by means of a thick material piston pump (1), thereby **characterized**,
   that at a measuring point (50) of the delivery pipe (22) a solid body conducted sound signal attributable to the pulsating flowing conveyed material is measured,
   that the solid body conducted sound signal is derived from flow or friction noise of the pulsating flowing conveyed material in the delivery pipe (22) in the vicinity of the measuring point (50),
   that the intensity- or amplitude-curve of the measured solid body conducted sound signal is detected during the individual pressure strokes of the thick material piston pump,
   that the stroke duration of the piston of the thick material piston pump is measured or predetermined for an individual pressure stroke, and
   that the pulse duration of the measured solid body sound signals are evaluated in relationship to the stroke duration of the piston for determining the conveyed amount.

2. Process according to Claim 1, thereby **characterized**, that the flowing or friction noise is amplified by a change in cross-section or a non-homogeneity in the wall of the delivery pipe (22) in the vicinity of the measuring point (50).

3. Process according to one of Claims 1 or 2, thereby **characterized**, that the solid body sound signal is amplified by a vibrator or oscillator provided on or in the delivery pipe (22) and responsive to the flow or friction noises of the pulsatingly flowing conveyed material.

4. Process according to one of Claims 1 through 3, thereby **characterized**, that from the measured solid body sound signal a defined frequency band is selected, of which the intensity or amplitude curve is digitized and statically evaluated.

5. Process according to one of Claims 1 through 4, thereby **characterized**, that the piston path or the piston speed of the thick material piston pump during the individual pressure strokes are predetermined or measured, and that the pulse duration and/or the intensity or amplitude curve of the measured solid body sound signal are compared with the piston path or the piston speed and evaluated for determining the conveyed amount.

6. Process according to one of Claims 1 through 5, thereby **characterized**, that solid body sound signal is measured by a sound or acceleration sensor coupled onto the delivery pipe (22) or embedded in the wall thereof.

7. Process according to one of Claims 1 through 6, thereby **characterized**,
   that the intensity value $K_i$ of the solid body sound signals is determined during each respective piston stroke in defined time intervals,
   that at the end of each piston stroke, from a number (m) of intensity values ($K_i$), an average value is formed which corresponds to the conveyance level (K),
   that a tolerance band downwards limited by a tolerance factor (1-x) < 1 is determined from the conveyor level (K) of a previous piston stroke,
   that for determination of the degree of fill (r) the number ($n_K$) of intensity values ($K_i$) lying within the tolerance band during each piston stroke are determined and divided by the total number (n) of the time steps during the piston stroke, and
   that for determining the conveyor volume per piston stroke the degree of fill (r) is multiplied by the cylinder volume ($V_Z$) through which the piston transitions.

8. Process according to Claim 7, thereby **characterized**, that the tolerance factor (1-x) is selected between 0.04 and 0.25, preferably between 0.07 and 0.13.

9. Device for determining the conveyed amount of conveyed material conveyed in pulsating manner through a delivery pipe (22) by means of thick material piston pump, **characterized by** a sensor (52) provided at a measuring point (50) of the delivery pipe (22) for measuring a solid body sound signal produced by the pulsatingly flowing conveyed material, of which the output is connected to an evaluation unit (56) for determining the conveyed amount, wherein the evaluation unit (56) includes circuitry and/or a software program for determining and evaluating the pulsed duration of the measured solid body sound signal during each pressure stroke of the thick material piston pump.

10. Device according to one of Claim 9, thereby **characterized**, that the sensor (52) is formed as a piezo-electric sound or acceleration sensor.

11. Device according to Claim 9, thereby **characterized**, that the sensor is a microphone.

12. Device according to one of Claims 9 through 11, thereby **characterized**, that the delivery pipe (22) in the area of the measuring pipe (50) exhibits a cross-sectional change, a wall non-homogeneity or an oscillator or vibrator.

13. Device according to one of Claims 9 through 12, thereby **characterized**, that the sensor (52) is rigidly coupled with the delivery pipe (22) or is embedded in the wall thereof.

14. Device according to one of Claims 9 through 13, thereby **characterized**, that the sensor (52) is provided on a carrier provided with a magnet for coupling onto the delivery pipe (22) comprised of a magnetizable material.

15. Device according to one of Claims 9 through 14, thereby **characterized**, that the evaluation unit (56) includes a calibration input (62) for the conveyed amount to be determined.

**Revendications**

1. Procédé pour déterminer le débit d'une matière transportée de façon pulsée au moyen d'une pompe à matières épaisses à piston (1) à travers un tube de transport (22), **caractérisé en ce que** l'on mesure à un point de mesure (50) du tube de transport (22) un signal de bruit structural provoqué par la matière transportée s'écoulant de façon pulsée, que l'on déduit le signal de bruit structural d'un bruit d'écoulement ou de frottement de la matière transportée s'écoulant de façon pulsée qui apparaît dans le tube de transport (22) au niveau du point de mesure (50), que l'on détermine la courbe d'intensité ou d'amplitude du signal de bruit structural mesuré et que l'on en déduit la durée d'impulsion du signal de bruit structural mesuré pour les différentes courses de compression de la pompe à matières épaisses à piston, que l'on prescrit ou mesure la durée de course du piston de la pompe à matières épaisses à piston pour les différentes courses de compression, et que l'on évalue la durée d'impulsion du signal de bruit structural mesuré par rapport à la durée de course du piston pour déterminer le débit.

**2.** Procédé selon la revendication 1, **caractérisé en ce que** le bruit d'écoulement ou de frottement est amplifié par une modification de section ou inhomogénéité de paroi du tube de transport (22) au niveau du point de mesure (50).

**3.** Procédé selon la revendication 1 ou 2, **caractérisé en ce que** le signal de bruit structural est amplifié par un générateur d'oscillations disposé sur ou dans le tube de transport (22) et réagissant aux bruits d'écoulement ou de frottement de la matière transportée s'écoulant de façon pulsée.

**4.** Procédé selon l'une des revendications 1 à 3, **caractérisé en ce que** l'on sélectionne à partir du signal de bruit structural mesuré une bande de fréquences définie dont la courbe d'intensité ou d'amplitude est numérisée et statistiquement évaluée.

**5.** Procédé selon l'une des revendications 1 à 4, **caractérisé en ce que** l'on prescrit ou mesure la course de piston ou la vitesse de piston de la pompe à matières épaisses à piston pour les différentes courses de compression, et que l'on compare la durée d'impulsion et/ou la courbe d'intensité ou d'amplitude du signal de bruit structural mesuré avec la course de piston ou la vitesse de piston et on l'évalue pour déterminer le débit.

**6.** Procédé selon l'une des revendications 1 à 5, **caractérisé en ce que** l'on mesure le signal de bruit structural au moyen d'un capteur de son ou d'accélération couplé au tube de transport (22) ou encastré dans sa paroi.

**7.** Procédé selon l'une des revendications 1 à 6, **caractérisé en ce que** l'on saisit la valeur d'intensité ($K_i$) du signal de bruit structural à des pas de temps définis pendant chaque course de piston, qu'à la fin de chaque course de piston on forme une moyenne définie comme niveau de transport ($\overline{K}$) à partir d'un nombre (m) de valeurs d'intensité ($K_i$), qu'à partir du niveau de transport ($\overline{K}$) d'une course de piston précédente on détermine une bande de tolérance limitée vers le bas d'un facteur de tolérance (1-x) < 1, qu'à chaque course de piston on détermine le nombre ($n_K$) de valeurs d'intensité ($K_i$) situées à l'intérieur de la bande de tolérance et on le divise par le nombre total (n) de pas de temps pendant une course de piston pour déterminer un degré de remplissage (r), et que pour déterminer le volume transporté par course de piston on multiplie le degré de remplissage (r) par le volume cylindrique ($V_z$) parcouru par le piston.

**8.** Procédé selon la revendication 7, **caractérisé en ce que** le facteur de tolérance (1-x) est choisi entre 0,04 et 0,25, de préférence entre 0,07 et 0,13.

**9.** Dispositif pour déterminer le débit d'une matière transportée de façon pulsée au moyen d'une pompe à matières épaisses à piston à travers un tube de transport (22), **caractérisé par** un capteur (52) disposé à un point de mesure (50) du tube de transport (22) pour mesurer un signal de bruit structural provoqué par la matière transportée s'écoulant de façon pulsée, qui est relié côté sortie à une unité d'évaluation (56) servant à déterminer le débit, l'unité d'évaluation (56) présentant un circuit ou une routine logicielle pour déterminer et évaluer la courbe d'intensité ou d'amplitude et pour déterminer la durée d'impulsion du signal de bruit structural mesuré à chaque course de compression de la pompe à matières épaisses à piston, et l'unité d'évaluation (56) pouvant être soumise en plus à des signaux de déplacement ou de commande de la pompe à matières épaisses à piston.

**10.** Dispositif selon la revendication 9, **caractérisé en ce que** le capteur (52) est réalisé sous forme de capteur de son ou d'accélération piézoélectrique.

**11.** Dispositif selon la revendication 9, **caractérisé en ce que** le capteur est réalisé sous forme de microphone.

**12.** Dispositif selon l'une des revendications 9 à 11, **caractérisé en ce que** le tube de transport (22) présente au niveau du point de mesure (50) un rétrécissement de section, une inhomogénéité de paroi ou un générateur d'oscillations.

**13.** Dispositif selon l'une des revendications 9 à 12, **caractérisé en ce que** le capteur (52) est couplé rigidement au tube de transport (22) ou encastré dans sa paroi.

**14.** Dispositif selon l'une des revendications 9 à 13, **caractérisé en ce que** le capteur (52) est disposé sur un support présentant un aimant pour le couplage au tube de transport (22) composé d'un matériau magnétisable.

**15.** Dispositif selon l'une des revendications 9 à 14, **caractérisé en ce que** l'unité d'évaluation (56) présente une entrée de calibrage (62) pour le débit à déterminer.

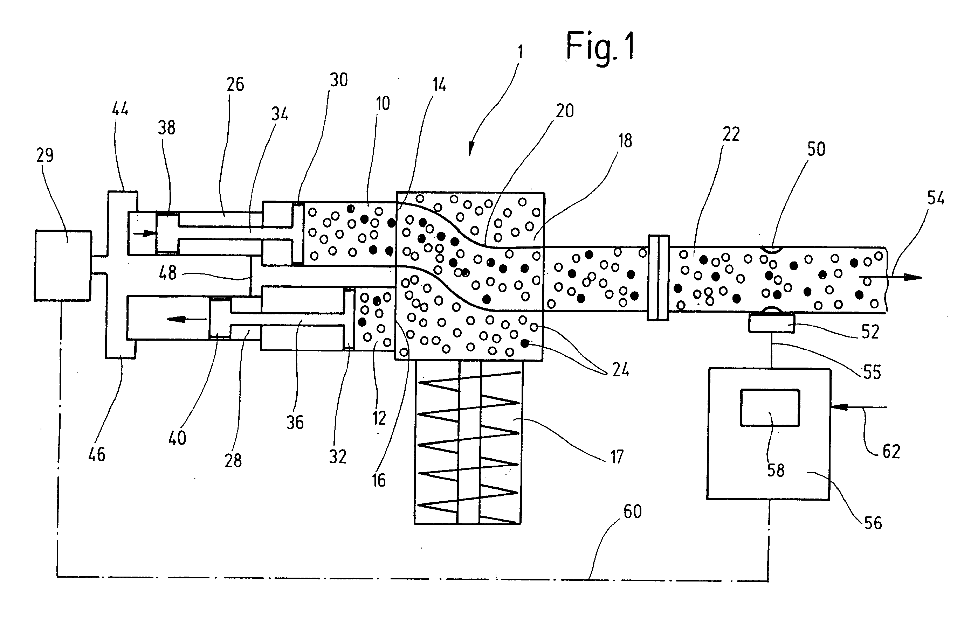

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4035518 C
- DE 4206576 A
- EP 0519752 A2
- EP 0519754 A2